# EUROPEAN PATENT APPLICATION

(11) **EP 4 617 088 A1**
(43) Date of publication of application: **17.09.2025**
(21) Application number: 24773814.9
(22) Date of filing: 02.02.2024
(51) Int. Cl.: B60H 1/00, B60K 11/02, B60L 58/26, B60L 58/27

(54) **THERMAL MANAGEMENT SYSTEM, THERMAL MANAGEMENT METHOD, AND VEHICLE**

(30) Priority: 22.03.2023 CN 202310283713
(71) Applicant: Wuxi InfiMotion Propulsion Technology Co., Ltd., Wuxi, Jiangsu 214181 (CN); Wuxi InfiMotion Technology Co., Ltd., Wuxi, Jiangsu 214181 (CN)
(72) Inventor: CHEN, Yun, Wuxi, Jiangsu 214181 (CN); LIU, Feng, Wuxi, Jiangsu 214181 (CN); HAN, Tao, Wuxi, Jiangsu 214181 (CN); YU, Haisheng, Wuxi, Jiangsu 214181 (CN); LIN, Xiaozhe, Wuxi, Jiangsu 214181 (CN)
(74) Representative: Michalski Hüttermann & Partner Patentanwälte mbB
(86) International application number: PCT/CN2024/075582
(87) International publication number: WO 2024/193246

(57) **Abstract**

A thermal management system, a thermal management method applied to a thermal management system of a vehicle, and a vehicle including a thermal management system. The thermal management system includes an air conditioning management system (100), a motor management system (200), a battery management system (300), a passenger compartment management system (400), and a charger management system (500); and the air conditioning management system (100) is connected to the motor management system (200), the battery management system (300), the passenger compartment management system (400), and the charger management system (500) through a refrigerant pipeline. The thermal management system is a refrigerant system and is integrated with a charger, which eliminates the need for additional facilities such as coolant pipelines, water pumps, and coolant radiators to cool the charger, and reduces the occupation of space inside the vehicle. Meanwhile, the refrigerant has a high cooling efficiency, and can cool the charger effectively.

## Description

### TECHNICAL FIELD

This disclosure relates to the field of vehicle thermal management technologies, and in particular, to a thermal management system, a thermal management method, and a vehicle.

### BACKGROUND

With the increasing popularity of new energy vehicles at present, thermal management for the new energy vehicles has always been an unavoidable topic. The normal operation and endurance of the vehicles are related to thermal management systems for batteries, motors, passenger compartment air conditioners, and chargers.

### SUMMARY

This disclosure provides a thermal management system integrated with a charger, a thermal management method, and a vehicle.

The present disclosure discloses a thermal management system, applied to a vehicle, and including an air conditioning management system, a motor management system, a battery management system, a passenger compartment management system, and a charger management system; where the air conditioning management system is connected to the motor management system, the battery management system, the passenger compartment management system, and the charger management system through a refrigerant pipeline.

Further, the air conditioning management system includes a main pipeline and a refrigerant heat dissipation pipeline; an outflow end of the main pipeline is connected to an inflow end of the refrigerant heat dissipation pipeline, and the main pipeline is provided with a compressor; and the refrigerant heat dissipation pipeline is provided with an air conditioning condenser and a first solenoid valve.

Further, the charger management system includes a charger cooling pipeline and a charger disposed in the charger cooling pipeline; an outflow end and an inflow end of the charger cooling pipeline are respectively connected to an inflow end of the main pipeline and an outflow end of the refrigerant heat dissipation pipeline; and a fourth electronic expansion valve is disposed at the inflow end of the charger cooling pipeline.

Further, the motor management system includes a motor refrigerant pipeline and a motor; the motor is a direct refrigerant-cooled motor, and a refrigerant flows into the motor from one end of the motor, passes through the motor, and flows out of the motor from the other end of the motor; an outflow end and an inflow end of the motor refrigerant pipeline are respectively connected to an inflow end of the main pipeline and an outflow end of the refrigerant heat dissipation pipeline; and a first electronic expansion valve is disposed at the inflow end of the motor refrigerant pipeline.

Further, the motor management system further includes a controller disposed between the motor and the first electronic expansion valve; the motor includes a rotor and a stator, which are in direct contact with the refrigerant; and the motor is capable of generating heat under a stall condition.

Further, the battery management system includes a battery pack, a battery cooling pipeline, and a battery heating pipeline; an outflow end and an inflow end of the battery cooling pipeline are respectively connected to the inflow end of the main pipeline and the outflow end of the refrigerant heat dissipation pipeline; an inflow end and an outflow end of the battery heating pipeline are respectively connected to the outflow end of the main pipeline and the inflow end of the motor refrigerant pipeline; a second electronic expansion valve is disposed at the inflow end of the battery cooling pipeline; and a second solenoid valve is disposed at the inflow end of the battery heating pipeline.

Further, the passenger compartment management system includes a passenger compartment heating pipeline and a passenger compartment cooling pipeline; an inflow end and an outflow end of the passenger compartment heating pipeline are respectively connected to the outflow end of the main pipeline and the inflow end of the motor refrigerant pipeline; an outflow end and an inflow end of the passenger compartment cooling pipeline are respectively connected to the inflow end of the main pipeline and the outflow end of the refrigerant heat dissipation pipeline; the passenger compartment heating pipeline is provided with a heater core and a third solenoid valve; and the passenger compartment cooling pipeline is provided with an evaporator and a third electronic expansion valve, and the third electronic expansion valve is disposed at the inflow end of the passenger compartment cooling pipeline.

The present disclosure further discloses a vehicle, including the above-described thermal management system.

The present disclosure further discloses a thermal management method, applied to a thermal management system of a vehicle, where the thermal management system includes an air conditioning management system, a motor management system, a battery management system, a passenger compartment management system, and a charger management system; the thermal management method including: cooling, by the air conditioning management system, the motor management system, the battery management system, the passenger compartment management system, and the charger management system, through a refrigerant; and heating, by the air conditioning management system, the battery management system and the passenger compartment management system, through the refrigerant.

Further, the motor management system includes a motor and a controller; and the thermal management method further includes: recovering, by the air conditioning management system, heat from the motor and the controller, through the refrigerant, to heat the battery management system and the passenger compartment management system.

Further, the vehicle has a high-temperature driving mode, a normal-temperature driving mode, a low-temperature driving mode, a low-temperature cold start mode, and a parking charging mode; and the thermal management method further includes: in the low-temperature cold start mode, the motor management system performing self-heating first, and the air conditioning management system recovering heat from the motor management system through the refrigerant to heat the battery management system and the passenger compartment management system; and in the parking charging mode, the air conditioning management system cooling the battery management system or the charger management system through the refrigerant.

Compared with the related art, the thermal management system according to the present disclosure is a refrigerant system and is integrated with a charger, which eliminates the need for additional facilities such as coolant pipelines, water pumps, and coolant radiators to cool the charger, and greatly reduces the occupation of space inside the vehicle. Meanwhile, the refrigerant has a higher cooling efficiency, and can cool the charger more effectively.

It is to be understood that the foregoing general description and the following detailed description are exemplary and explanatory only, and are not intended to limit the present disclosure.

### BRIEF DESCRIPTION OF DRAWINGS

The drawings herein, which are incorporated into and constitute a part of this specification, illustrate embodiments consistent with the present disclosure and are used in conjunction with the specification to explain the principles of the present disclosure.
FIG. 1 is a schematic diagram of a thermal management system according to the present disclosure.
FIG. 2 is a schematic diagram of a motor in FIG. 1 with a part of a housing removed.
FIG. 3 is a front view of a rotor in FIG. 2.

Description of reference numerals: 100-air conditioning management system; 110-main pipeline; 111-compressor; 112-pressure sensor; 113-temperature sensor; 120-refrigerant heat dissipation pipeline; 121-first solenoid valve; 122-air conditioning condenser; 200-motor management system; 210-motor refrigerant pipeline; 211-first electronic expansion valve; 220-motor; 221-refrigerant inlet; 222-refrigerant outlet; 223-rotor; 224-stator; 225-shaft seal; 226-through hole; 230-controller; 300-battery management system; 310-battery pack; 320-battery cooling pipeline; 321-second electronic expansion valve; 330-battery heating pipeline; 331-second solenoid valve; 400-passenger compartment management system; 410-passenger compartment heating pipeline; 411-third solenoid valve; 412-heater core; 420-passenger compartment cooling pipeline; 421-third electronic expansion valve; 422-evaporator; 500-charger management system; 510-charger cooling pipeline; 511-fourth electronic expansion valve; 520-charger.

### DETAILED DESCRIPTION

Exemplary embodiments will be described in detail herein, with examples thereof represented in the drawings. When the following description refers to the drawings, the same reference numerals in different drawings indicate the same or similar elements, unless otherwise specified. The embodiments described in the following examples do not represent all embodiments consistent with the present disclosure. Rather, they are merely examples of apparatuses and methods consistent with some aspects of the present disclosure as detailed in the appended claims.

Terms used in the present disclosure are for the purpose of describing particular examples only, and are not intended to limit the present disclosure. Terms determined by "a", "the" and "said" in their singular forms in this specification and the appended claims are intended to include plural forms as well, unless clearly indicated otherwise in the context. It should also be understood that the term "and/or" as used herein refers to and includes any or all possible combinations of one or more of the associated listed items.

It should be understood that, though terms "first," "second," "third," and the like may be used in the present disclosure to describe various information, such information should not be limited by these terms. These terms are only used to distinguish the same type of information from one another. For example, without departing from the scope of the present disclosure, first information may also be referred to as second information; and similarly, the second information may also be referred to as the first information. Depending on the context, the term "if" as used herein may be interpreted as "when" or "upon" or "in response to determining".

At present, capacity of batteries and power of chargers of new energy vehicles are increasing, which comes with problems of heat dissipation of the chargers. The charger cooling system in the related art occupies too much space and has insufficient cooling capacity.

In view of this, embodiments of the present disclosure provide a thermal management system, a thermal management method, and a vehicle. The embodiments of the present disclosure will be described below in detail.

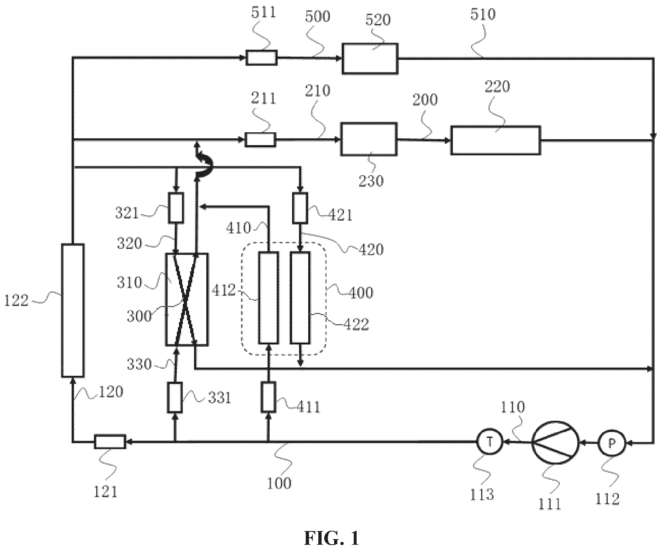

As shown in FIG. 1, the thermal management system according to the present disclosure is applied to a vehicle, and includes an air conditioning management system 100, a motor management system 200, a battery management system 300, a passenger compartment management system 400, and a charger management system 500. The air conditioning management system 100 is connected to the motor management system 200, the battery management system 300, the passenger compartment management system 400, and the charger management system 500 through a refrigerant pipeline.

The air conditioning management system 100 includes a main pipeline 110 and a refrigerant heat dissipation pipeline 120. An inflow end of the refrigerant heat dissipation pipeline 120 is connected to an outflow end of the main pipeline 110. The main pipeline 110 is provided with a compressor 111, a pressure sensor 112, and a temperature sensor 113. The pressure sensor 112 is disposed on a side of the compressor 111 close to an inflow end of the main pipeline 110, and the temperature sensor 113 is disposed on a side of the compressor 111 close to the outflow end of the main pipeline 110. The refrigerant heat dissipation pipeline 120 is provided with a first solenoid valve 121 and an air conditioning condenser 122 sequentially from an inflow end to an outflow end thereof. A refrigerant, after being compressed by the compressor 111, is in a high-temperature and high-pressure state. The high-temperature and high-pressure refrigerant, when passing through the air conditioning condenser 122, discharges heat and is changed into low-temperature and high-pressure refrigerant.

The motor management system 200 includes a motor refrigerant pipeline 210, a motor 220, and a controller 230. The motor 220 is a direct refrigerant-cooled motor, and the refrigerant flows into the motor 220 from one end of the motor 220, passes through the motor 220, and flows out of the motor 220 from the other end of the motor 220. An inflow end of the motor refrigerant pipeline 210 is connected to an outflow end of the refrigerant heat dissipation pipeline 120, and an outflow end of the motor refrigerant pipeline 210 is connected to the inflow end of the main pipeline 110. A first electronic expansion valve 211 is disposed at the inflow end of the motor refrigerant pipeline 210, and the controller 230 is disposed between the motor 220 and the first electronic expansion valve 211.

The low-temperature and high-pressure refrigerant flowing out of the air conditioning condenser 122, after passing through the first electronic expansion valve 211, sharply decreases in temperature. The low-temperature refrigerant first cools the controller 230, and then takes away heat from the motor 220 to cool the motor 220. The refrigerant carries the heat from the motor 220 and the controller 230 to the compressor 111 for heat recovery.

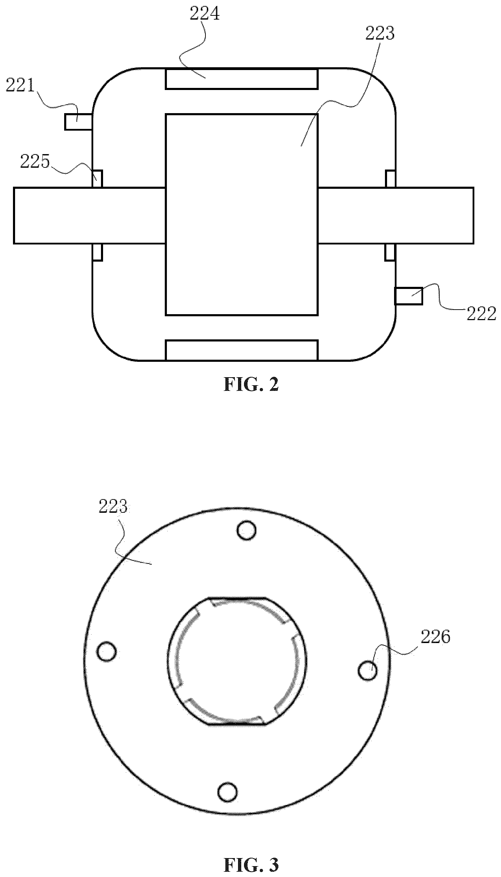

As shown in FIG. 2 and FIG. 3, a housing of the motor 220 is provided with a refrigerant inlet 221 at one end, and is provided with a refrigerant outlet 222 at the other end. The motor 220 includes a rotor 223 and a stator 224 therein, the rotor 223 is rotatable about a shaft, and the stator 224 is disposed on the inside of the housing of the motor 220 around the rotor 223. A gap is left between the rotor 223 and the stator 224. The rotor 223 is provided with four through holes 226 in an axial direction, and the through holes 226 are evenly distributed in the rotor 223 in a circumferential direction of the rotor 223.

The refrigerant flows into the motor 220 from the refrigerant inlet 221, passes through the through holes 226 and the gap between the rotor 223 and the stator 224, and flows out of the motor 220 from the refrigerant outlet 222. The refrigerant is in direct contact with the rotor 223 and the stator 224, which allows for better cooling of the motor 220 and more efficient recovery of heat from the motor 220. Moreover, since the refrigerant is in direct contact with the rotor 223 and the stator 224, the motor 220 can generate heat under stall conditions at low temperatures without burnout of the motor 220.

As shown in FIG. 1, the battery management system 300 includes a battery pack 310, a battery cooling pipeline 320, and a battery heating pipeline 330. An inflow end of the battery cooling pipeline 320 is connected to the outflow end of the refrigerant heat dissipation pipeline 120, and an outflow end of the battery cooling pipeline 320 is connected to the inflow end of the main pipeline 110. An inflow end of the battery heating pipeline 330 is connected to the outflow end of the main pipeline 110, and an outflow end of the battery heating pipeline 330 is connected to the inflow end of the motor refrigerant pipeline 210. A second electronic expansion valve 321 is disposed at the inflow end of the battery cooling pipeline 320. A second solenoid valve 331 is disposed at the inflow end of the battery heating pipeline 330.

The passenger compartment management system 400 includes a passenger compartment heating pipeline 410 and a passenger compartment cooling pipeline 420. An inflow end and an outflow end of the passenger compartment heating pipeline 410 are respectively connected to the outflow end of the main pipeline 110 and the inflow end of the motor refrigerant pipeline 210. An outflow end and an inflow end of the passenger compartment cooling pipeline 420 are respectively connected to the inflow end of the main pipeline 110 and the outflow end of the refrigerant heat dissipation pipeline 120. The passenger compartment heating pipeline 410 is provided with a third solenoid valve 411 and a heater core 412 sequentially from the inflow end to the outflow end. The passenger compartment cooling pipeline 420 is provided with a third electronic expansion valve 421 and an evaporator 422 sequentially from the inflow end to the outflow end.

The charger management system 500 includes a charger cooling pipeline 510 and a charger 520 disposed in the charger cooling pipeline 510. An inflow end of the charger cooling pipeline 510 is connected to the outflow end of the refrigerant heat dissipation pipeline 120, and an outflow end of the charger cooling pipeline 510 is connected to the inflow end of the main pipeline 110. A fourth electronic expansion valve 511 is disposed at the inflow end of the charger cooling pipeline 510.

With the thermal management system according to the present disclosure, the motor 220 is directly connected to the refrigerant pipeline, and the refrigerant passes through the motor 220 and directly contacts the rotor 223 and the stator 224 of the motor 220, enabling direct cooling and recovery of heat from the motor 220 through the refrigerant. In this way, the heat exchange efficiency is high and the heat loss is low. The continuous power of the motor 220 is greatly improved at high temperatures and the heat recovery rate of the motor 220 is improved at low temperatures, so that a performance of a heat pump can be restored more quickly.

The thermal management system according to the present disclosure uses a pure refrigerant pipeline without any coolant pipeline. The vehicle does not need to be provided with coolant radiators, water pumps, and coolant pipelines, which reduces the difficulty in arrangement of the thermal management pipelines in the vehicle, reduces a volume of the thermal management system, and reduces a weight of a vehicle body.

In the present disclosure, the charger 520 and the controller 230 are further integrated into the refrigerant pipeline. At high temperatures, the charger 520 and the controller 230 are directly cooled by using the refrigerant, which enables a good cooling effect. At low temperatures, heat is recovered from the controller 230 by using the refrigerant to avoid heat waste.

The present disclosure further discloses a vehicle, including the above-described thermal management system.

The present disclosure further discloses a thermal management method, applied to the above-described thermal management system. The thermal management method includes: cooling, by the air conditioning management system 100, the motor management system 200, the battery management system 300, the passenger compartment management system 400, and the charger management system 500, through the refrigerant; and heating, by the air conditioning management system 100, the battery management system 300 and the passenger compartment management system 400, through the refrigerant.

The vehicle includes five operation modes: a high-temperature driving mode, a normal-temperature driving mode, a low-temperature driving mode, a low-temperature cold start mode, and a parking charging mode.

In the high-temperature driving mode, the motor 220 and the battery pack 310 need to be cooled, and the passenger compartment needs to be cooled. At this time, the air conditioning compressor 111 is operated, the second solenoid valve 331 is closed, the third solenoid valve 411 is closed, and the first solenoid valve 121 is opened. The first electronic expansion valve 211 is opened to cool the controller 230 and the motor 220, the second electronic expansion valve 321 is opened to dissipate heat from the battery pack 310, and the third electronic expansion valve 421 is opened to cool the passenger compartment. Since the refrigerant, after passing through the expansion valve, is at a temperature of about -10°C, the motor 220 can be effectively cooled, which greatly increases the continuous power and continuous torque of the motor 220.

In the normal-temperature driving mode, the passenger compartment does not need to be cooled, the battery pack 310 is cooled on demand, and the motor 220 needs to be cooled. At this time, the air conditioning compressor 111 is operated, the second solenoid valve 331 is closed, the third solenoid valve 411 is closed, the first solenoid valve 121 is opened, and the first electronic expansion valve 211 is opened to cool the controller 230 and the motor 220. When it is detected that the temperature of the battery pack 310 exceeds a set value, the second electronic expansion valve 321 is opened to cool the battery pack 310.

In the low-temperature driving mode, the passenger compartment and the battery pack 310 need to be heated, and the motor 220 needs to be cooled. At this time, the compressor 111 is operated, and the first solenoid valve 121 is closed. The second solenoid valve 331 is opened, and the high-temperature refrigerant reaches the battery pack 310 to heat the battery pack 310. The third solenoid valve 411 is opened, and the high-temperature refrigerant reaches the heater core 412 to heat the passenger compartment. After the refrigerant passes through the heater core 412 and the battery pack 310, the first electronic expansion valve 211 is opened, and the refrigerant passes through the controller 230 and the motor 220 to recover heat from the controller 230 and the motor 220.

The direct heat exchange between the refrigerant and the motor 220 enables higher temperature difference and higher heat recovery efficiency. After that, the refrigerant carrying the heat from the controller 230 and the motor 220 participates in circulation again.

In the low-temperature cold start mode, both the battery pack 310 and the passenger compartment need to be heated urgently. At this time, the ambient temperature is so low that the heat pump can hardly be operated. The compressor 111 is turned on, the first solenoid valve 121 is closed, and the first electronic expansion valve 211 is opened. The motor 220 is started for self-heating, and the motor 220 generates heat under the stall conditions, and the refrigerant carries the heat from the motor 220 to the compressor 111 to participate in circulation. The second solenoid valve 331 is opened, and the high-temperature refrigerant reaches the battery pack 310 to heat the battery pack 310. The third solenoid valve 411 is opened, and the high-temperature refrigerant reaches the heater core 412 to heat the passenger compartment.

Since the refrigerant, after passing through the first electronic expansion valve 211, is at a temperature of about -10°C, the function of the heat pump can be restored quickly to heat the passenger compartment and the battery pack 310, without too high a rise in the self-heating temperature of the motor 220.

In the parking charging mode, the first solenoid valve 121 is opened, the second solenoid valve 331 is closed, the third solenoid valve 411 is closed, and the compressor 111 is turned on. When the temperature of the battery pack 310 exceeds a set value, the second electronic expansion valve 321 is opened to cool the battery pack 310. When the temperature of the charger 520 exceeds a set value, the fourth electronic expansion valve 511 is opened to cool the charger 520.

The foregoing are merely some of the embodiments of the present disclosure, but are not intended to limit the present disclosure in any form. Although the present disclosure has been disclosed above in some embodiments, these embodiments are not intended to limit the present disclosure. Any skilled in the art may utilize the technical content disclosed above to make some changes or modifications to equivalent variations to obtain equivalent embodiments without departing from the scope of the technical solution of the present disclosure. However, any simple variations, equivalent changes, and modifications made to the above embodiments according to the technical essence of the present disclosure without departing from the content of the technical solution of the present disclosure still fall within the scope of the technical solution of the present disclosure.

## Claims

1. A thermal management system, applied to a vehicle, and comprising: an air conditioning management system, a motor management system, a battery management system, a passenger compartment management system, and a charger management system;
wherein the air conditioning management system is connected to the motor management system, the battery management system, the passenger compartment management system, and the charger management system through a refrigerant pipeline.

2. The thermal management system according to claim 1, wherein
the air conditioning management system comprises a main pipeline and a refrigerant heat dissipation pipeline;
an outflow end of the main pipeline is connected to an inflow end of the refrigerant heat dissipation pipeline, and the main pipeline is provided with a compressor; and
the refrigerant heat dissipation pipeline is provided with an air conditioning condenser and a first solenoid valve.

3. The thermal management system according to claim 2, wherein
the charger management system comprises a charger cooling pipeline and a charger disposed in the charger cooling pipeline;
an outflow end and an inflow end of the charger cooling pipeline are respectively connected to an inflow end of the main pipeline and an outflow end of the refrigerant heat dissipation pipeline; and
a fourth electronic expansion valve is disposed at the inflow end of the charger cooling pipeline.

4. The thermal management system according to claim 2, wherein
the motor management system comprises a motor refrigerant pipeline and a motor;
the motor is a direct refrigerant-cooled motor, and a refrigerant flows into the motor from one end of the motor, passes through the motor, and flows out of the motor from the other end of the motor;
an outflow end and an inflow end of the motor refrigerant pipeline are respectively connected to an inflow end of the main pipeline and an outflow end of the refrigerant heat dissipation pipeline; and
a first electronic expansion valve is disposed at the inflow end of the motor refrigerant pipeline.

5. The thermal management system according to claim 4, wherein
the motor management system further comprises a controller disposed between the motor and the first electronic expansion valve;
the motor comprises a rotor and a stator, which are in direct contact with the refrigerant; and
the motor is capable of generating heat under a stall condition.

6. The thermal management system according to claim 4, wherein
the battery management system comprises a battery pack, a battery cooling pipeline, and a battery heating pipeline;
an outflow end and an inflow end of the battery cooling pipeline are respectively connected to the inflow end of the main pipeline and the outflow end of the refrigerant heat dissipation pipeline;
an inflow end and an outflow end of the battery heating pipeline are respectively connected to the outflow end of the main pipeline and the inflow end of the motor refrigerant pipeline;
a second electronic expansion valve is disposed at the inflow end of the battery cooling pipeline; and
a second solenoid valve is disposed at the inflow end of the battery heating pipeline.

7. The thermal management system according to claim 4, wherein
the passenger compartment management system comprises a passenger compartment heating pipeline and a passenger compartment cooling pipeline;
an inflow end and an outflow end of the passenger compartment heating pipeline are respectively connected to the outflow end of the main pipeline and the inflow end of the motor refrigerant pipeline;
an outflow end and an inflow end of the passenger compartment cooling pipeline are respectively connected to the inflow end of the main pipeline and the outflow end of the refrigerant heat dissipation pipeline;
the passenger compartment heating pipeline is provided with a heater core and a third solenoid valve; and
the passenger compartment cooling pipeline is provided with an evaporator and a third electronic expansion valve, and the third electronic expansion valve is disposed at the inflow end of the passenger compartment cooling pipeline.

8. A thermal management method, applied to a thermal management system of a vehicle, the thermal management system comprising an air conditioning management system, a motor management system, a battery management system, a passenger compartment management system, and a charger management system,
the thermal management method comprising:
cooling, by the air conditioning management system, the motor management system, the battery management system, the passenger compartment management system, and the charger management system, through a refrigerant; and
heating, by the air conditioning management system, the battery management system and the passenger compartment management system, through the refrigerant.

9. The thermal management method according to claim 8, wherein the motor management system comprises a motor and a controller; and
the thermal management method further comprises:
recovering, by the air conditioning management system, heat from the motor and the controller, through the refrigerant, to heat the battery management system and the passenger compartment management system.

10. The thermal management method according to claim 9, wherein the vehicle has a high-temperature driving mode, a normal-temperature driving mode, a low-temperature driving mode, a low-temperature cold start mode, and a parking charging mode; and
the thermal management method further comprises:
in the low-temperature cold start mode, the motor management system performing self-heating, and the air conditioning management system recovering heat from the motor management system through the refrigerant to heat the battery management system and the passenger compartment management system; and
in the parking charging mode, the air conditioning management system cooling the battery management system or the charger management system through the refrigerant.

11. A vehicle, comprising a thermal management system, the thermal management system comprising an air conditioning management system, a motor management system, a battery management system, a passenger compartment management system, and a charger management system;
wherein the air conditioning management system is connected to the motor management system, the battery management system, the passenger compartment management system, and the charger management system through a refrigerant pipeline.
